# EUROPEAN PATENT APPLICATION

(11) **EP 1 458 195 A2**
(43) Date of publication of application: **15.09.2004**
(21) Application number: 04005000.7
(22) Date of filing: 03.03.2004
(51) Int. Cl.: H04N 7/173

(54) **Information apparatus and mail control method**

(30) Priority: 05.03.2003 JP 2003058863
(71) Applicant: Kabushiki Kaisha Toshiba, Tokyo (JP)
(72) Inventor:
(74) Representative: Henkel, Feiler & Hänzel

(57) **Abstract**

A wireless AV station (101) includes a mail reception determining unit (711a) and a storage/notification control unit (711b). The mail reception determining unit (711a) determines a presence/absence of a received mail message via a network. When the mail reception determining unit (711a) determines the presence of the received mail message, the storage/notification control unit (711b) acquires and stores the received mail message in a storage medium (51), and outputs video data which contains image information to notify of a fact of mail reception from a video output terminal to a television receiver (102).

## Description

The present invention relates to an information processing apparatus and a mail control method which can control apparatuses used in a home or the like.

In general, e-mail messages (to be referred to as mail messages hereinafter) exchanged among clients are managed by a mail server of a service provider or the like. Mail messages submitted by respective clients are stored in mailboxes for respective clients provided to the mail server. Each client accesses a mail box of the mail server to receive mail messages addressed to him or her.

A client that exchanges mail messages is implemented by a personal computer or the like installed with mail software. In this case, it is a common practice to manage (send/receive, save, browse, and the like) mail messages using a single personal computer or the like.

For example, Jpn. Pat. Appln. KOKAI Publication No. 2002-215540 discloses a mail reception apparatus which allows a single terminal or personal computer to handle mail messages addressed to a plurality of different users.

However, each user must always attend to a personal computer to immediately detect arrival of mail messages addressed to him or her, and his or her actions are bound by the personal computer.

For example, the user does not always sit at a personal computer and operate it, but often does other things (e.g., watching a television program in front of a television apparatus). At this time, the user cannot notice arrival of an urgent mail message, and falls behind detection of mail reception.

Embodiments of the present invention may provide an information apparatus and a mail control method which can quickly notify the user of mail reception even when the user does not sit at a personal computer or the like.

According to one aspect of the present invention, there is provided an information apparatus, comprising a determination unit which determines a presence/absence of a received mail message via a network; and a control unit which acquires and stores, when the determination unit determines the presence of the received mail message, the received mail message in a storage medium, and outputs video data which contains image information to notify of a fact of mail reception from a video output terminal to a television receiver.

According to another aspect of the present invention, there is provided a mail control method applied to an information apparatus having a video output terminal, comprising determining a presence/absence of a received mail message via a network; and acquiring and storing, when the presence of the received mail message is determined in the determination, the received mail message in a storage medium and outputting video data containing image information to notify of a fact of mail reception from the video output terminal to a television receiver.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the arrangement of a home network system using an information processing apparatus according to an embodiment of the present invention;
FIG. 2 is a block diagram showing the arrangement of a wireless AV station;
FIG. 3 is a block diagram showing the arrangement of each information processing apparatus serving as a client;
FIG. 4 is a block diagram showing the arrangement associated with mail control according to the embodiment of the present invention;
FIG. 5 is a table for explaining the items of received mail management information;
FIG. 6 is a diagram showing an example that allows notification and browsing of a received mail message on the screen of a TV receiver;
FIG. 7 is a diagram showing an example that notifies of reception of a mail message on the screen of a personal computer;
FIG. 8 is a diagram showing an example that allows the user to browser a received mail message on the screen of the personal computer;
FIG. 9 is a flow chart showing the operation of a mail control unit in the wireless AV station;
FIG. 10 is a flow chart showing the operation on the wireless AV station side for browsing received mail information on the screen of the TV receiver;
FIG. 11 is a flow chart showing the operation on the personal computer side for browsing received mail information on the screen of the user's personal computer;
FIG. 12 is a flow chart showing the operation on the wireless AV station side for browsing received mail information on the screen of the user's personal computer;
FIG. 13 is a diagram showing a state wherein arrival of a mail message is notified while a video of broadcast program data obtained from a TV tuner built in the TV receiver is being output;
FIG. 14 is a block diagram showing an example of the internal arrangement of the TV receiver;
FIG. 15 is a diagram showing a modification that allows the personal computer to directly access a mail server; and
FIG. 16 is a flow chart showing the operation of the mail control unit in the personal computer in the modification shown in FIG. 15.

Embodiments of the present invention will be described below with reference to the drawings.

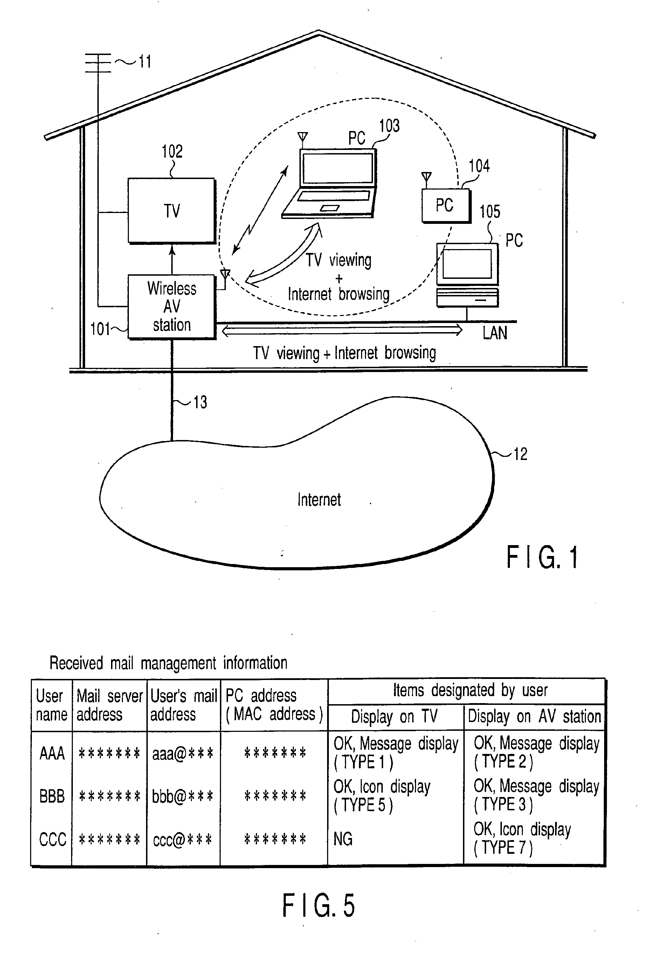

FIG. 1 shows the arrangement of a home network system using an information processing apparatus according to an embodiment of the present invention.

The home network system includes a wireless AV (audio/video) station 101, TV receiver (or TV set) 102, notebook personal computers 103 and 104, desktop personal computer 105, and the like.

The wireless AV station 101 serves as a home network server. The wireless AV station 101 provides services associated with viewing of broadcast program data of the TV or the like, Internet browsing, and the like to information processing apparatuses such as the personal computers 103 to 105 and the like via a wireless or wired network in the house. The wireless AV station 101 can also output broadcast program data of the TV or the like to the TV receiver 102.

The wireless AV station 101 is connected to an external global network (external network) such as the Internet 12 or the like via a communication line 13 such as an ISDN (Integrated Services Digital Network), ADSL (Asymmetric Digital Subscriber Line), CATV (Cable TV), or the like. Furthermore, the wireless AV station 101 is connected to various information processing apparatuses in the home via a wired or wireless network which forms the home network.

Each of the personal computers 103 to 105 serves as a client of the wireless AV station 101. The notebook personal computers 103 and 104 have wireless communication devices, and can establish wireless connection to the wireless AV station 101. The desktop personal computer 105 is connected to the wireless AV station 101 via a wired LAN.

The wireless AV station 101 connects the personal computers 103 to 105 to the Internet 12 to exchange data between Web sites on the Internet 12 and the personal computers 103 to 105.

An antenna cable connected to an outdoor TV broadcast reception antenna 11 is led indoors. The TV receiver 102 and wireless AV station 101 are connected to that antenna cable. Broadcast program data transmitted from a broadcasting station can be received and played back by the TV receiver 102, and can also be received by the wireless AV station 101. The wireless AV station 101 wirelessly transmits the received broadcast program data to the notebook personal computers 103 and 104 via a wireless LAN. Or the wireless AV station 101 transmits the received broadcast program data to the desktop personal computer 105 via the wired LAN.

The wireless AV station 101 provides the following principal functions:

### (1) Wireless router function

A wireless router function is a function of wirelessly connecting each information processing apparatus which can communicate with the wireless AV station 101 via the wireless LAN to the Internet 12, and exchanging data between Web sites on the Internet 12 and that information processing apparatus. The user can wirelessly browse the Internet anywhere in the home using the notebook personal computer 103 or 104, which can be connected to the wireless AV station 101 via the wireless LAN.

### (2) TV function

A TV function is a function of transmitting broadcast program data received by the wireless AV station 101 to each information processing apparatus connected to the wireless AV station 101 via the wireless or wired LAN. The user can view broadcast program data (live video), which is now on the air, anywhere in the home using the notebook personal computer 103 or 104.

### (3) TV video recording function

The wireless AV station 101 incorporates a magnetic disk drive device (hard disk drive; HDD) as a large-capacity storage device for recording broadcast program data. The wireless AV station 101 can wirelessly transmit broadcast program data, which is now on the air, to the information processing apparatuses, while recording that broadcast program data on the magnetic disk drive device as a file. Also, the wireless AV station 101 can wirelessly transmit broadcast program data which has already been recorded on the magnetic disk drive device to the information processing apparatuses, while recording another broadcast program data, which is now on the air, on the magnetic disk drive device. Furthermore, the wireless AV station 101 can output broadcast program data recorded on the magnetic disk drive device to the TV receiver 102.

### (4) Content server function

The wireless AV station 101 can transmit various contents such as broadcast program data and the like, which are recorded as files on the magnetic disk drive device, to the information processing apparatus as a request source in response to a data acquisition request from that information processing apparatus.

### (5) Remote control function

The TV function, TV video recording function, and the like of the wireless AV station 101 can be remote-controlled by each of the personal computers 103 to 105. Also, the TV function, TV video recording function, and the like of the wireless AV station 101 can be controlled using a dedicated remote controller unit used to operate the wireless AV station 101. Furthermore, the wireless AV station 101 can be remote-controlled by a portable phone, personal computer, or the like via the Internet.

### (6) Mail control function

The wireless AV station 101 can individually save received mail messages or mail messages to be sent corresponding to the users of the personal computers 103 to 105 in the magnetic disk drive. Also, the wireless AV station 101 always connects a mail server on the Internet via the communication line 13. Upon reception of a mail message for one of the users of the personal computers 103 to 105, the wireless AV station 101 stores that received mail message in the magnetic disk drive, and can display a message or icon indicating the fact of mail reception on the screen of the personal computer of the corresponding user, the screen of the TV receiver 102, the display panel screen of the wireless AV station 101, and the like. The wireless AV station 101 can send designated information to the corresponding personal computer in response to a mail browse request from that personal computer. Also, the wireless AV station 101 can output a video of designated information from it to the TV receiver 102 in response to a mail browser request issued by operating the remote controller or the like.

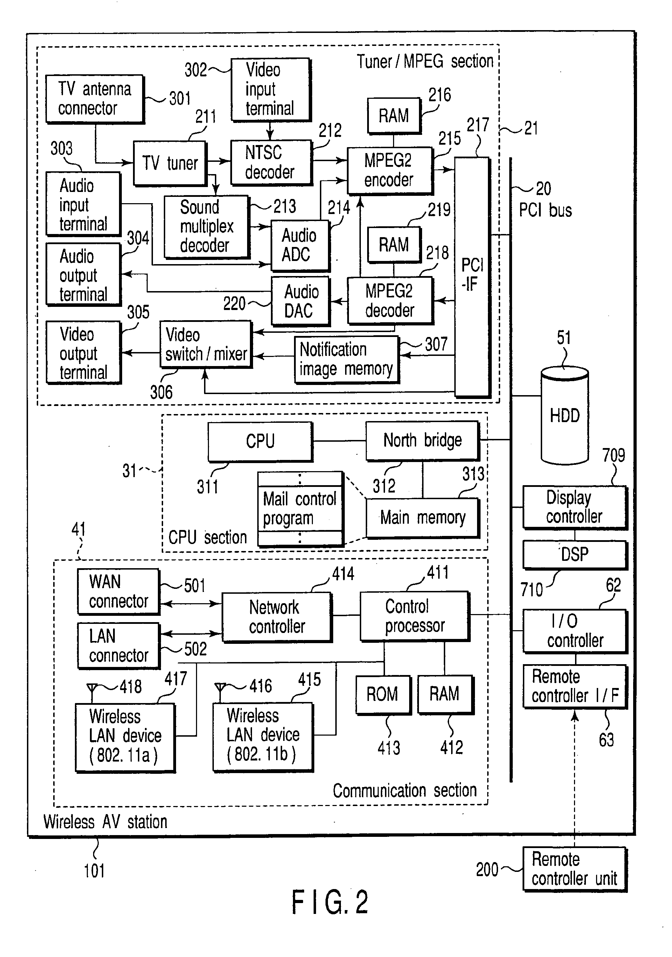

The arrangement of the wireless AV station 101 will be described below with reference to FIG. 2.

As shown in FIG. 2, the wireless AV station 101 roughly includes three major components, i.e., a tuner/MPEG section 21, CPU section 31, and communication section 41.

These tuner/MPEG section 21, CPU section 31, and communication section 41 are respectively connected to a bus 20 such as a PCI bus or the like. Also, a magnetic disk drive device (hard disk drive; HDD) 51 is connected to the bus 20.

The tuner/MPEG section 21 executes a reception process of broadcast program data, an encode process for compression-encoding the received broadcast program data, a decode process for decoding the compression-encoded TV broadcast program data, and the like. As shown in FIG. 2, the tuner/MPEG section 21 includes a TV tuner 211, NTSC (National TV Standards Committee) decoder 212, sound multiplex decoder 213, audio A/D converter (audio ADC) 214, MPEG2 encoder 215, RAM 216, PCI bus interface (PCI-IF) 217, MPEG2 decoder 218, RAM 219, audio D/A converter (audio DAC) 220, and the like.

The TV tuner 211 is connected to a TV antenna cable via a TV antenna connector 301. The TV tuner 211 is a device for receiving broadcast program data of a channel, which is designated by a viewing request from the personal computers 103 to 105 or a remote controller unit 200. The TV tuner 211 receives a TV broadcast signal and selects a channel on the basis of the viewing request. TV broadcast program data of a given channel, which is received by the TV tuner 211, is sent to the NTSC decoder 212, which separates the input TV broadcast program data into a video signal (moving picture) and audio signal. Furthermore, the separated signals undergo a conversion process into digital data as needed.

The NTSC decoder 212 is also connected to a video input terminal 302, and can receive video signals from external video devices such as a DVD (Digital Versatile Disc) player, VCR (Video Cassette Recorder), and the like. A sound multiplex signal superposed on the TV broadcast program data is decoded by the sound multiplex decoder 213, and is sent to the audio A/D converter (audio ADC) 214, which converts the input signal into digital data. The audio A/D converter (audio ADC) 214 is also connected to an audio input terminal 303, and can receive audio signals from external video/audio devices.

The MPEG2 encoder 215 executes an encode process for compression-encoding the input video and audio data. This encode process is executed according to the MPEG2 standards. The RAM 216 is used as a work memory of the encode process executed by the MPEG2 encoder 215. The broadcast program data, which is received by the TV tuner 211, is encoded by the MPEG2 encoder 215 to be converted into an MPEG2 stream.

The PCI bus interface (PCI-IF) 217 connects the tuner/MPEG section 21 to the bus 20, and allows the tuner/MPEG section 21 to communicate with the CPU section 31 and HDD 51 via the bus 20. The PCI bus interface (PCI-IF) 217 incorporates registers which can be accessed by the CPU section 31. The operations of the TV tuner 211 and MPEG2 encoder 215 are controlled in accordance with commands, which are set in the registers of the PCI bus interface (PCI-IF) 217 by the CPU section 31.

The MPEG2 decoder 218 decodes the broadcast program data encoded in the MPEG2 format. For example, when encoded broadcast program data recorded on the HDD 51 is to be played back by the TV receiver 102, encoded TV broadcast program data, which is read out from the HDD 51, is sent to and decoded (decompressed) by the MPEG2 decoder 218 via the PCI bus interface 217. The RAM 219 is used as a work memory of the decode process executed by the MPEG2 decoder 218. The operation of the MPEG2 decoder 218 is also controlled by commands, which are set in the registers of the PCI bus interface (PCI-IF) 217 by the CPU section 31. Video data decoded by the MPEG2 decoder 218 is sent to a video switch/mixer 306.

A notification image memory 307 stores various kinds of image information (messages and icons) to be displayed on the screen of the TV receiver 102 upon reception of mail messages addressed to the respective users of the personal computers 103 to 105. Several types (having different colors and designs) of messages and icons are prepared in advance so as to identify individual users. The CPU section 31 can control to rewrite the image information in the notification image memory 307.

The video switch/mixer 306 switches an operation mode in accordance with commands, which are set in the registers in the PCI bus interface 217 by the CPU section 31. For example, when a command which designates mail reception notification, and a command which designates image information to be read out from the notification image memory 307 are set, the video switch/mixer 306 reads out the designated image information from the notification image memory 307 in accordance with the commands.
(1) When no command that designates mail reception notification is set while the video switch/mixer 306 receives video data sent from the MPEG2 decoder 218, the video switch/mixer 306 passes through the video data alone to a video output terminal 305. On the other hand, (2) when the command that designates mail reception notification is set while the video switch/mixer 306 receives video data sent from the MPEG2 decoder 218, the video switch/mixer 306 reads out the designated image information from the notification image memory 307, superimposes the readout image information at a predetermined position on the image of the video data, and sends that video data to the video output terminal 305. Also, (3) when the command that designates mail reception notification is set while the video switch/mixer 306 does not receive any video data sent from the MPEG2 decoder 218, the video switch/mixer 306 reads out the designated image information from the notification image memory 307, and sends video data containing the readout image information to the video output terminal 305. (4) When no command that designates mail reception notification is set while the video switch/mixer 306 does not receive any video data sent from the MPEG2 decoder 218, the video switch/mixer 306 is inactive.

The video data sent to the video output terminal 305 is output to the TV receiver 102. When the power switch of the TV receiver 102 is OFF, the video data output from the video output terminal 305 is not accepted by the TV receiver 102, as a matter of course. The wireless AV station 101 does not detect whether or not video data is accepted by the TV receiver 102.

Audio data decoded by the MPEG2 decoder 218 is converted into an analog signal as needed by the audio D/A converter (audio DAC) 220, and is then output to the TV receiver 102 or the like via an audio output terminal 304.

Furthermore, in this embodiment, broadcast program data decoded by the MPEG2 decoder 218 can be input to the MPEG2 encoder 215 again, and can undergo an encode process. This process is used to execute a down-convert process for converting the transmission rate (bit rate) of encoded broadcast program data which is recorded on the HDD 51 into a specific transmission rate corresponding to the frequency band of, e.g., the wireless LAN or the like.

More specifically, the transmission rate (bit rate) of encoded broadcast program data (MPEG2 stream) obtained by the encode process of the MPEG2 encoder 215 varies depending on the image quality (low image quality, standard image quality, high image quality) of broadcast program data to be recorded on the HDD 51. When high image quality is selected, the MPEG2 stream of broadcast program data having a very high transmission rate is recorded on the HDD 51. In this case, the MPEG2 stream of that broadcast program data cannot often be transmitted in real time in the frequency band of a wireless communication. In such case, a down-convert process for down-converting the transmission rate of the MPEG2 stream of broadcast program data to be wirelessly transmitted to a specific transmission rate for wireless transmission is executed.

The CPU section 31 controls the TV tuner 211, MPEG2 encoder 215, and MPEG2 decoder 218 in the tuner/MPEG section 21, and also controls data read/write accesses from/to the HDD 51. The CPU section 31 receives commands associated with TV viewing transmitted from the personal computers 103 to 105 and transmits an MPEG2 stream of broadcast program data to be transmitted to the personal computers 103 to 105 to the communication section 41 via communications with the communication section 41. The CPU section 31 includes a CPU 311, a north bridge 312 which connects a CPU bus of the CPU 311 and the PCI bus 20, and a main memory 313. For example, a mail control program resides on the main memory 313. The CPU section 31 implements the aforementioned mail control function by executing this mail control program.

The communication section 41 is a communication controller which can serve as a wireless LAN router by itself. The communication section 41 can establish wireless connection to the personal computers 103 and 104, and is also connected to the personal computer 105 via the wired LAN. The communication section 41 connects the personal computers 103 to 105 to the Internet 12 in response to requests transmitted from these personal computers 103 to 105, and exchanges data between the personal computers 103 to 105 and the Internet 12. In this case, all data exchange processes between the personal computers 103 to 105 and Internet 12 are done within the communication section 41, and the CPU section 31 is not used.

As shown in FIG. 2, the communication section 41 includes a control processor 411, RAM 412, ROM 413, network controller 414, two wireless LAN devices 415 and 417, WAN connector 501, LAN connector 502, and the like.

The WAN (Wide Area Network) connector 501 is a broadband terminal used to exchange data with the Internet 12. The connector 501 is connected to the communication line 13 via a modem or the like. The LAN connector 502 is connected to the wired LAN in the home.

The network controller 414 is a network control device which controls exchange of data with the Internet 12 via the WAN connector 501, and exchange of data with the home wired LAN via the LAN connector 502. The wireless LAN devices 415 and 417 are wireless communication devices which respectively exchange data with the personal computers 103 and 104 via the wireless LAN. These devices 415 and 417 wirelessly communicate with the personal computers 103 and 104 via corresponding antennas 416 and 418. The wireless LAN device 415 is configured to execute wireless communications complying with IEEE 802.11b. The wireless LAN device 417 is configured to execute wireless communications complying with IEEE 802.11a. Since the two wireless LAN devices 415 and 417 are equipped, wireless communications can be made using either IEEE 802.11b or IEEE 802.11a. The wireless LAN device used in a wireless communication is seamlessly switched in correspondence with the wireless communication standard supported by a client, which is wirelessly connected to the wireless AV station 101.

The control processor 411 controls the network controller 414 and wireless LAN devices 415 and 417 to control data exchange between the personal computers 103 to 105 and the Internet 12. More specifically, the control processor 411 includes an IP masquerade function, NAT (Network Address Translation) function, DHCP (Dynamic Host Configuration Protocol) function, and the like as those which are required to operate the communication section 41 as a wireless router. Furthermore, the control processor 411 is connected to the PCI bus 20, and has a function of notifying the CPU 311 of requests (commands) or the like associated with TV viewing, which are received from the personal computers 103 and 104 via the wireless LAN device 415 or 417, and notifying the CPU 311 of requests (commands) or the like associated with TV viewing, which are received from the personal computer 105 on the wired LAN via the network controller 414.

Moreover, the control processor 411 has a function of transmitting, upon receiving broadcast program data transferred from the CPU 311 via the PCI bus 20, that broadcast program data to a personal computer as a request source via the wireless LAN device 415 or 417, or the network controller 414. In this case, the transmission process of the broadcast program data to the personal computer as the request source is executed parallel to data exchange between that personal computer and the Internet 12.

For example, when the personal computer 103 which can be wirelessly connected to the communication section 41 is wirelessly browsing the Internet, and broadcast program data requested by that personal computer 103 is to be wirelessly transmitted to the personal computer 103, the control processor 411 controls the wireless LAN device 415 or 417 so that Web content data received from a Web server on the Internet 12 and the broadcast program data encoded by the tuner/MPEG section 21 are time-divisionally transmitted to the personal computer 103 via wireless communications. More specifically, the control processor 411 executes a process for multiplexing the Web content data and encoded broadcast program data, and time-divisionally transmits the multiplexed Web content data and encoded broadcast program data to the personal computer 103 via wireless communications. In this way, by sending the Web content data and broadcast program data as independent data to the personal computer 103, the personal computer 103 can simultaneously display these Web content data and broadcast program data using corresponding application programs. Also, the display positions and display sizes of windows used to display the Web content data and broadcast program data can be freely changed by the corresponding application programs.

The aforementioned functions of the control processor 411 are implemented by firmware stored in the ROM 413.

Furthermore, the wireless AV station 101 has a display controller 709, display panel (DSP) 710, I/O controller 62, remote controller interface 63, and the like.

The display controller 709 displays various kinds of information on the screen of the display panel 710 in accordance with an instruction from the CPU 311. The display panel 710 is controlled by the display controller 709, and displays information.

The I/O controller 62 and remote controller interface 63 are used to receive remote controller codes which are transmitted from the remote controller unit 200 via infrared ray signals or the like. The received remote controller codes are sent to the CPU section 31 via the bus 20.

The HDD 51 is used to record various contents such as broadcast program data, still picture data, audio data, and the like. The CPU 311 manages contents recorded on the HDD 51 as a content database. The content database stores additional information such as a program title name, channel number, song name, genre, artist name, and the like for each content data recorded on the HDD 51. The CPU 311 provides the contents of the content database onto the screen of the TV receiver 102 or to each information processing apparatus as a content list menu in response to a command sent from the information processing apparatus or remote controller unit 200. The user can select desired content data with reference to the content list menu.

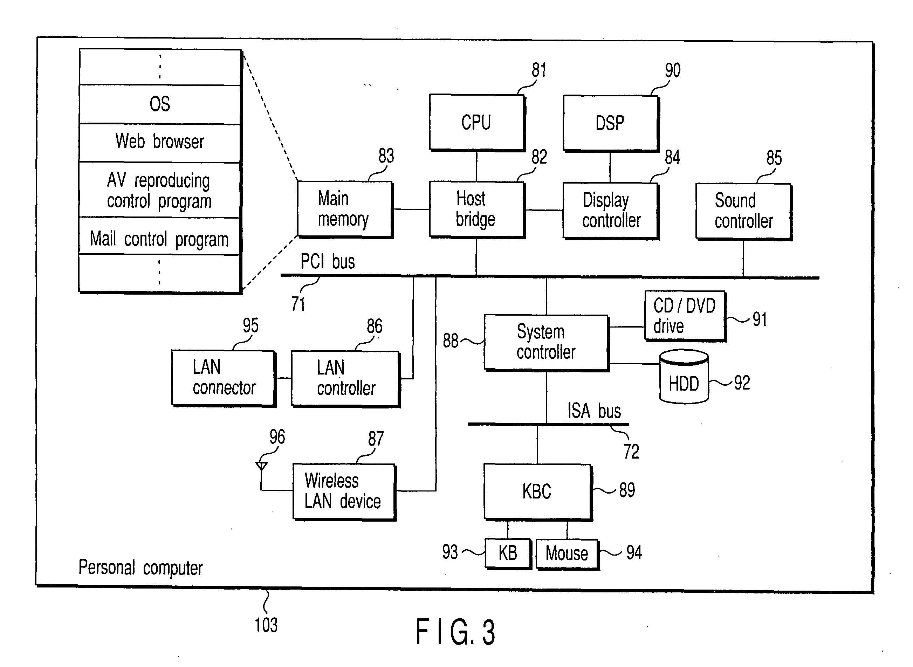

The arrangement of each information processing apparatus serving as a client will be described below with reference to FIG. 3. In this case, the notebook personal computer 103 will be exemplified below.

As shown in FIG. 3, the personal computer 103 includes a PCI bus 71, ISA bus 72, CPU 81, host bridge 82, main memory 83, display controller 84, sound controller 85, LAN controller 86, wireless LAN device 87, system controller 88, keyboard controller (KBC) 89, display monitor (DSP) 90, CD/DVD drive 91, HDD 92, keyboard (KB) 93, mouse 94, LAN connector 95, and the like.

The CPU 81 is a processor for controlling the operation of the personal computer 103, and executes various programs such as an operating system (OS), Web browser, AV reproducing control program, mail control program, and the like loaded onto the main memory 83.

The AV reproducing control program on the main memory 83 is an application program used to play back audio/video data (AV data). The AV reproducing control program has a function of remote-controlling the wireless AV station 101, a function of playing back AV data such as TV broadcast program data, music data, and the like transmitted from the wireless AV station 101, and a function of downloading AV data such as TV broadcast program data, music data, and the like from the wireless AV station 101 as files. Also, the AV reproducing control program can play back AV data recorded on a recording medium such as a CD/DVD, which is reproduced by the CD/DVD drive 91.

The mail control program on the main memory 83 has a function of displaying a mail reception notification window on the screen of the display monitor 90 upon reception of information that indicates mail reception notification from the wireless AV station, and a function of transmitting a mail browse request (a browse request of a mail list, mail data, attached file, or the like) input by the user to the wireless AV station 101, and displaying information sent in response to that request on the screen of the display monitor 90.

The display controller 84 is a device for controlling the display monitor 90 of the personal computer 103. The sound controller 85 is used as a sound source that outputs sounds corresponding to audio data.

The LAN controller 86 is a device for executing a communication with the wireless AV station 101 via the wired LAN. When the LAN connector 95 is connected to the wired LAN, the CPU 81 executes a communication with the wireless AV station 101 via the LAN controller 86.

The wireless LAN device 87 is a wireless communication device which exchanges data with the wireless AV station 101 via the wireless LAN. The wireless LAN device 87 wirelessly communicates with the wireless AV station 101 via an antenna 96. The wireless LAN device 87 is configured to make a wireless communication complying with IEEE 802.11b or IEEE 802.11a.

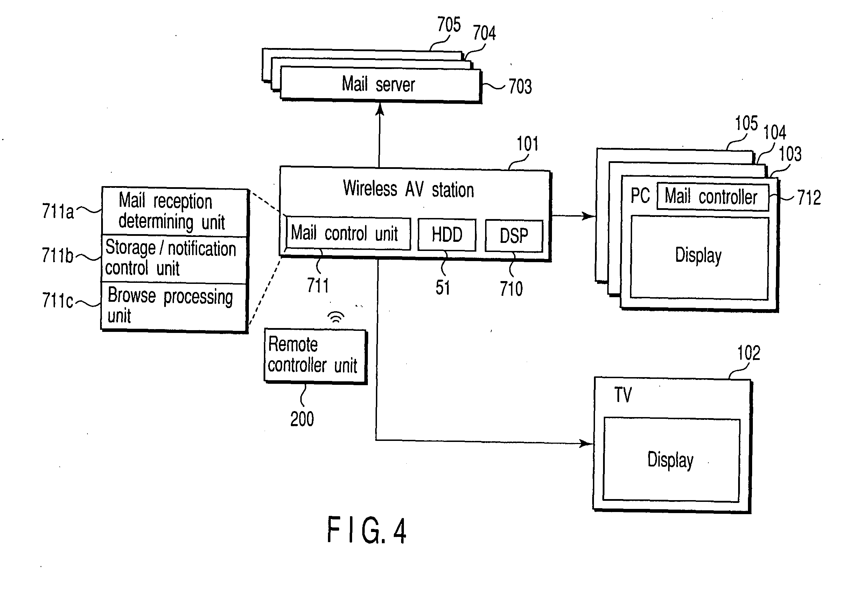

The arrangement associated with mail control in this embodiment will be described below with reference to FIG. 4.

Mail servers 703 to 705 are managed by individual Internet providers or the like, and respectively have mailboxes that store mail messages exchanged among clients. The mailboxes of the mail servers 703 to 705 individually store received mail messages addressed to the users of the personal computers 103 to 105. FIG. 4 illustrates three mail servers, but only one mail server may be used.

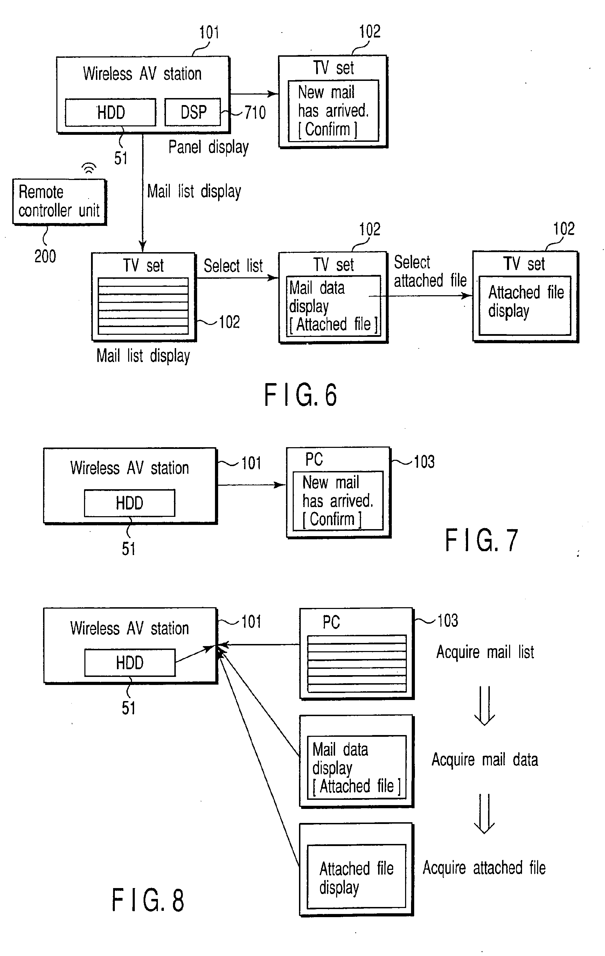

The wireless AV station 101 includes a mail control unit 711. The mail control unit 711 corresponds to the mail control program on the main memory 313 (FIG. 2). The mail control unit 711 includes various functions such as a mail reception determining unit 711a, storage/notification control unit 711b, browse processing unit 711c, and the like, and executes various processes associated with received mail messages with reference to received mail management information shown in FIG. 5. This received mail management information resides on, e.g., the main memory 313 (FIG. 2), and contains 1) a user name, 2) a mail server address, 3) a user's mail address, 4) an address (MAC address) of a user's personal computer, 5) user's designated items associated with a notification place and viewed style of a received mail message, and the like for each user.

The wireless AV station 101 is always connected to the mail servers 703 to 705 via the communication line 13 and Internet 12 (FIG. 1) under the control of the mail control unit 711. The mail reception determining unit 711a in FIG. 4 accesses mail posts provided to the mail servers 703 to 705 at given time intervals using the addresses of the mail servers and users' mail addresses in the received mail management information in FIG. 5, and checks the presence/absence of received mail messages.

When the mail reception determining unit 711a determines the presence of a received mail message, the storage/notification control unit 711b in FIG. 4 acquires that received mail message and stores it in a predetermined mail save area in the HDD 51. Also, the unit 711b displays information (message or icon) indicating the fact of mail reception at a place designated in advance by the corresponding user.

The mail save area is partitioned in correspondence with the users of the personal computers 103 to 105, and stores information of received mail messages and mail messages to be sent of the respective users ("mail list", "mail data (actual data)", "attached file (image or the like)"). Upon storing a received mail message in the mail save area, a difference from information that has already been stored in the mail save area may be stored in place of the entire contents of that received mail message. In such case, the storage capacity required for the mail save area can be reduced.

Also, the storage/notification control unit 711b determines the notification place and viewed style of each received mail message with reference to the user's designated items shown in FIG. 5. The received mail management information in FIG. 5 includes no special designation associated with a personal computer. However, the unit 711b notifies the personal computer of the destination user every time a mail message is received.

In the example of FIG. 5, whether or not information indicating the fact of mail reception is to be displayed on the screen of the TV receiver 102, and whether or not that information is to be displayed on the screen of the display panel 710 of the wireless AV station 101 main body are designated for respective users. Also, the viewed style (either a message or icon) in each screen display is designated. Furthermore, several types (having different colors and designs) of messages and icons are prepared in advance so as to identify individual users, and one of them is designated. Each user can change these designated items on the screen of the TV receiver 102 by operating the remote controller unit 200 or the like. Mail reception notification on the screens of both the TV receiver 102 and display panel 710 is preferably designated as a default before the user makes setup changes.

Upon displaying information indicating the fact of mail reception on the screen of the TV receiver 102, required setups on the hardware components shown in FIG. 2 are made under the control of the storage/notification control unit 711b. That is, when the CPU 311 sets commands in the registers in the PCI bus interface 217, image information (message or icon) of the corresponding viewed style is read out from the notification image memory 307. Video data containing that image information is formed by the video switch/mixer 306, and is output from the video output terminal 305. The output video data is input to the video input terminal of the TV receiver 102 side.

Upon displaying information indicating the fact of mail reception on the screen of the personal computer of the destination user, that information is transmitted to the corresponding personal computer via the communication section 41 shown in FIG. 2 under the control of the storage/notification control unit 711b.

The browse processing unit 711c in FIG. 4 executes a user authentication process upon reception of a browse request of a received mail message, which is input by operating the remote controller unit 200 or the like. The unit 711c reads out received mail information for the corresponding user from the HDD 51 in accordance with the authentication result, and outputs video data including the readout information to the TV receiver 102. The received mail information is output from the video output terminal 305 via the PCI bus 20, PCI bus interface 217, and video switch/mixer 306 in FIG. 2.

Also, the browse processing unit 711c in FIG. 4 executes a user authentication process upon reception of a browse request of a received mail message from one of the personal computers 103 to 105 via the network. The unit 711c reads out received mail information for the corresponding user from the storage medium in accordance with the authentication result, and sends the readout information to the personal computer as a browse request source. The received mail information is output from the communication section 41 via the PCI bus 20 in FIG. 2.

On the other hand, while the TV receiver 102 receives video data from the wireless AV station 101, it displays that image on its screen.

Each of the personal computers 103 to 105 includes a mail control unit 712. The mail control unit 712 corresponds to the mail control program on the main memory 313 (FIG. 3). Upon reception of notification of a received mail message from the wireless AV station 101, the mail control unit 712 displays a notification message or icon of the received mail message on the screen of the display monitor 90. When the user inputs a browse request of received mail information via an input device such as a keyboard, mouse, or the like, the mail control unit 712 issues that request to the wireless AV station 101, and displays information sent in response to the request on the screen of the display monitor 90.

FIG. 6 shows a state wherein the user receives notification of a received mail message, and browses that mail message on the screen of the TV receiver 102.

Assume that the TV receiver 102 receives broadcast program data supplied from the wireless AV station 101, and displays that image on the screen.

Upon reception of a mail message, if the designated items of the corresponding user on the received mail management information (FIG. 5) contain designation indicating display on the TV receiver 102, the wireless AV station 101 generates video data by superimposing image information of the designated format at a predetermined position on the image of the broadcast program data, and sends that video data to the TV receiver 102.

The TV receiver 102 displays the information of the incoming video data on its screen. When the user operates the remote controller unit 200 and presses a confirm button in the information displayed on the screen of the TV receiver 102, that message or the like is cleared.

When the user issues a browse request of the received mail message by operating the remote controller unit 200, a user authentication procedure is made. In accordance with the authentication result, a mail list of received mail messages of the corresponding user is read out from the HDD 51, and is displayed on the screen of the TV receiver 102. By further operating the remote controller unit 200, the user can open a desired mail message from the mail list to display mail data, or can open and display an attached file, which is attached to the mail data.

FIGS. 7 and 8 show a state wherein a given user receives notification of a received mail message, and browses that mail message on the screen of the personal computer (e.g., the personal computer 103).

Referring to FIG. 7, upon reception of a mail message, if the designated items of the corresponding user on the received mail management information (FIG. 5) contain designation indicating display on the personal computer, the wireless AV station 101 sends information indicating the fact of mail reception to the personal computer (e.g., the personal computer 103) of the destination user. The personal computer 103 displays the incoming information on its screen. When the power switch of the personal computer 103 is OFF, that display output is not made. When the user operates an input device of the personal computer 103 and presses a confirm button in the information displayed on the screen, that message or the like is cleared.

Referring to FIG. 8, when the user issues a browse request of a received mail message by operating the input device (keyboard, mouse, or the like) of the personal computer 103 side, the user authentication procedure is made on the wireless AV station 101 side. In accordance with the authentication result, a mail list of received mail messages of the corresponding user is read out from the HDD 51, and is displayed on the screen of the personal computer 103. By further operating the input device of the personal computer 103 side, the user can open a desired mail message from the mail list to display mail data, or can open and display an attached file, which is attached to the mail data.

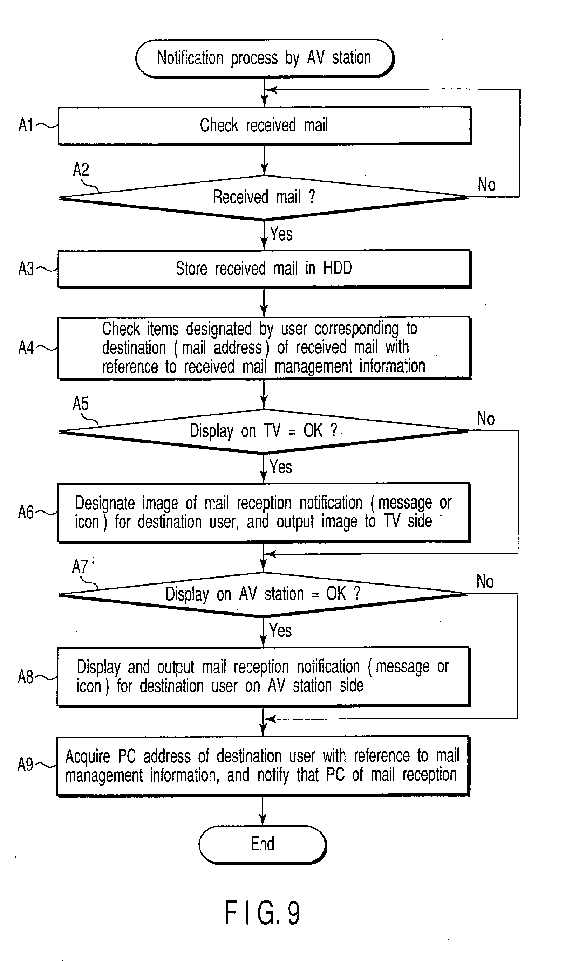

The operation of the mail control unit 711 in the wireless AV station 101 will be explained below with reference to FIG. 9.

The mail control unit 711 is always connected to the mail servers 703 to 705 via the network and determines whether or not mail messages are received (step A1).

If no mail message is received (No in step A2), the mail control unit 711 waits until a mail message is received. If a mail message is received (Yes in step A2), the mail control unit 711 stores that mail information in the HDD 51 (step A3), and checks the designated items (the notification place and viewed style of the received mail message) of the user corresponding to the destination of that received mail message with reference to the received mail management information (FIG. 5) (step A4).

If designation indicating display on the TV receiver 102 is found (Yes in step A5), the mail control unit 711 designates an image (message or icon) of mail reception notification for the destination user, and outputs video data containing that image to the TV receiver 102 (step A6). On the other hand, if designation indicating display on the TV receiver 102 is not found (No in step A5), the mail control unit 711 skips the mail reception notification process to the TV receiver 102.

If designation indicating display on the display panel 710 of the wireless AV station 101 main body is found (Yes in step A7), the mail control unit 711 designates an image (message or icon) of mail reception notification for the destination user, and displays that image on the display panel 710 (step A8). On the other hand, if designation indicating display on the display panel 710 of the wireless AV station 101 main body is not found (No in step A7), the mail control unit 711 skips the mail reception notification process on the display panel 710.

Furthermore, the mail control unit 711 acquires the address (MAC address) of the user's personal computer corresponding to the destination of the received mail message with reference to the received mail management information (FIG. 5), and sends a mail reception notification message or icon to that personal computer (step A9).

Users can designate in advance that information indicating the fact of mail reception is to be displayed on the screen of the TV receiver 102 or the display panel 710 of the wireless AV station 101 main body in addition to the screen of his or her personal computer. By such designation, each user can immediately confirm reception of a new mail message at that time.

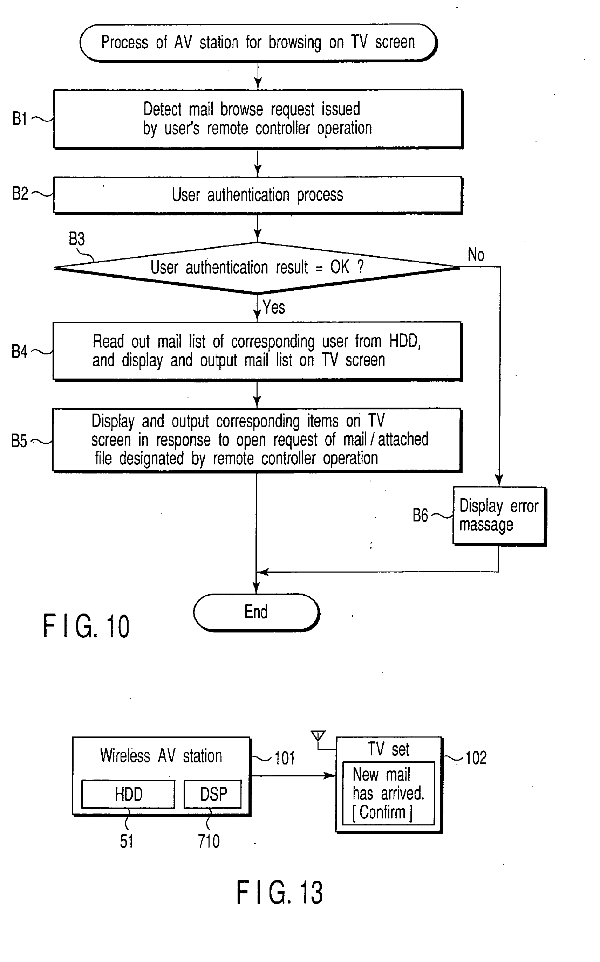

The operation on the wireless AV station 101 for browsing received mail information on the screen of the TV receiver 102 will be explained below with reference to FIG. 10.

When the user issues a browse request of a received mail message by operating the remote control unit 200, the mail control unit 711 detects that request (step B1), and executes a user authentication process (step B2).

If it is confirmed by the user authentication process that the user is authentic (Yes in step B3), the mail control unit 711 reads out a mail list of the corresponding user from the HDD 51, and outputs it to the TV receiver 102 (step B4).

When the user issues an open request of a desired mail message in the mail list or an open request of an attached file by operating the remote control unit 200, the mail control unit 711 reads out the designated information from the HDD 51 and outputs it to the TV receiver 102 (step B5).

If it is confirmed by the user authentication process in step B3 that the user is unauthentic (No in step B3), the mail control unit 711 executes a process for, e.g., outputting an image including an error message to the TV receiver 102 (step B6).

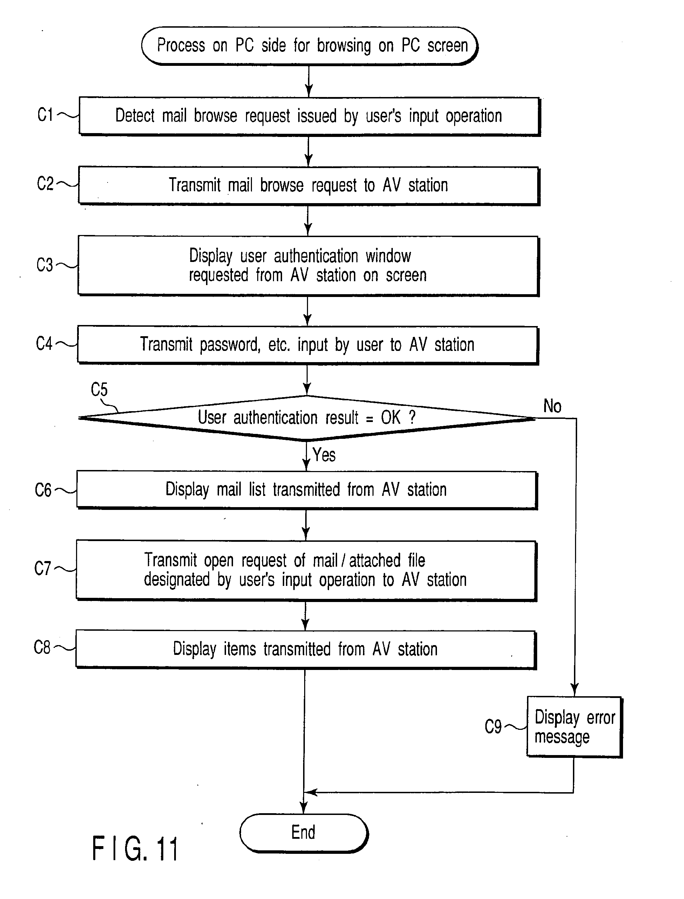

The operation on the personal computer side for browsing received mail information on the screen of the user's personal computer will be described below with reference to FIG. 11.

When the user issues a browse request of a received mail message by operating the input device (keyboard or mouse) of the personal computer, the mail control unit 712 detects that request (step C1). The mail control unit 712 transmits information indicating the browse request of the received mail message to the wireless AV station 101 (step C2), and displays a user authentication window requested from the wireless AV station 101 to the personal computer (step C3).

The mail control unit 712 transmits a password and the like input by the user to the wireless AV station 101 (step C4), and waits for the user authentication result from the wireless AV station 101.

If the wireless AV station 101 confirms that the user is authentic (Yes in step C5), and transmits a mail list of the corresponding user, the mail control unit 712 displays that mail list on the screen (step C6).

When the user issues an open request of a desired mail message in the mail list or an open request of an attached file by operating the input device (keyboard or mouse) of the personal computer, the mail control unit 712 transmits information indicating that request to the wireless AV station 101 (step C7). The mail control unit 712 displays information, which is returned from the wireless AV station 101 in response to that request, on the screen (step C8).

If information indicating that the user is unauthentic is returned from the wireless AV station 101 in step C5 (No in step C5), the mail control unit 712 executes a process for, e.g., displaying an error message on the screen (step C9).

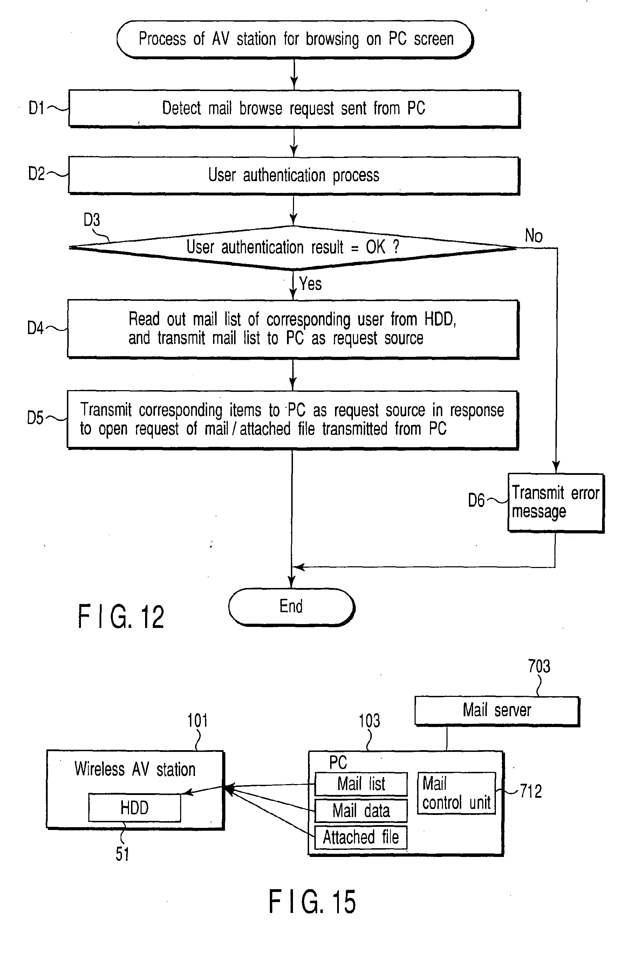

The operation on the wireless AV station 101 for browsing received mail information on the screen of the user's personal computer will be described below with reference to FIG. 12.

Upon detection of a received mail browse request sent from the personal computer of a given user (step D1), the mail control unit 711 executes a user authentication process (step D2).

If it is confirmed by the user authentication process that the user is authentic (Yes in step D3), the mail control unit 711 reads out a mail list of the corresponding user from the HDD 51, and transmits it to the personal computer as a browse request source (step D4).

If an open request of a desired mail message in the mail list or an open request of an attached file is received from the personal computer as a browse request source, the mail control unit 711 reads out the designated information from the HDD 51, and transmits it to the personal computer as a browse request source (step D5).

If it is confirmed by the user authentication process in step D3 that the user is unauthentic (No in step D3), the mail control unit 711 transmits information that advises accordingly to the personal computer as a browse request source (step D6).

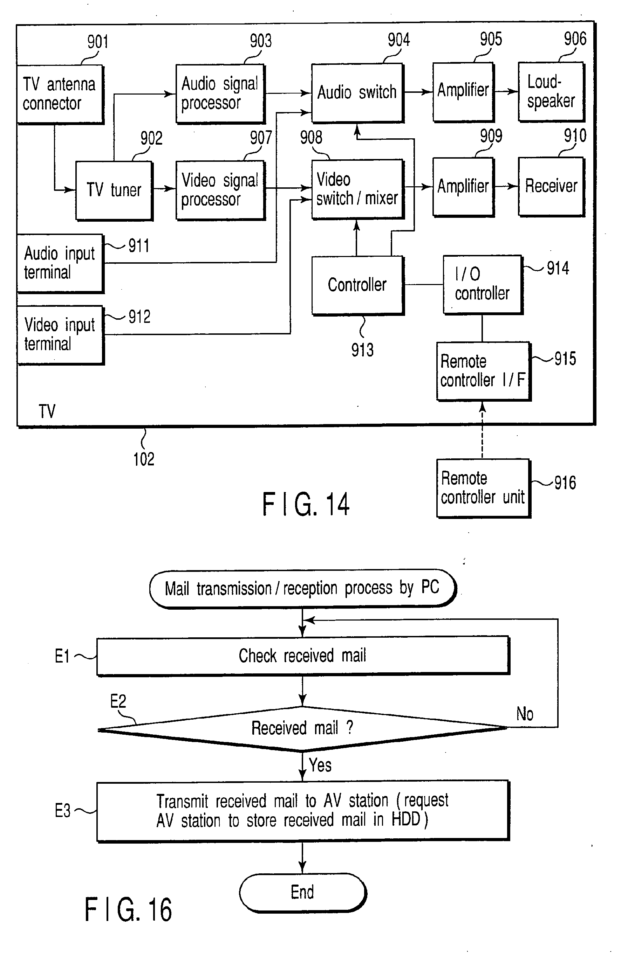

FIG. 13 shows a state wherein received mail notification is made while an image of broadcast program data obtained from the TV tuner built in the TV receiver 102 is output.

That is, upon reception of a new mail message, if the designated information of the corresponding user on the received mail management information (FIG. 5) contain designation indicating display on the TV receiver 102, the wireless AV station 101 sends video data containing image information of the designated format to the TV receiver 102.

On the other hand, the TV receiver 102 extracts the image information contained in the video data sent from the wireless AV station 101. Then, the TV receiver 102 can generate video data by superimposing that image information at a predetermined position on the image of the broadcast program data, and can display the generated video data. FIG. 14 shows an example of the internal arrangement of the TV receiver 102 in this case.

As shown in FIG. 14, broadcast program data of a channel designated by a viewing request is acquired by a TV tuner 902 which is connected to a TV antenna cable via a TV antenna connector 901.

The broadcast program data undergoes processes such as detection associated with audio and the like by an audio signal processor 903 to obtain audio data. Then, the obtained audio data is sent to an audio switch 904. On the other hand, audio data input from the wireless AV station 101 to an audio input terminal 911 is also sent to the audio switch 904. The audio switch 904 selectively inputs and outputs one of these audio data in accordance with a control signal from a controller 913. The output audio data is amplified by an amplifier 905, and is then output as a sound via a loudspeaker 906.

Also, the broadcast program data acquired by the TV tuner 902 undergoes processes such as detection associated with video and the like by a video signal processor 907 to obtain video data. Then, the obtained video data is sent to a video switch/mixer 908. On the other hand, video data input from the wireless AV station 101 to a video input terminal 912 is also sent to the video switch/mixer 908. The video switch/mixer 908 selectively inputs and outputs one of these video data, or outputs video data generated by extracting image information contained in the video data input from the video input terminal 912 and superimposing that image information at a predetermined position on the image of the video data from the video signal processor 907, in accordance with a control signal from the controller 913. The output video data is amplified by an amplifier 909, and is then output as an image from a receiver 910.

The user can select one of (1) a first operation mode that plays back broadcast program data acquired by the TV tuner 902 and (2) a second operation mode that plays back data externally input via the audio input terminal 911 and video input terminal 912 by operating a remote controller unit 916.

If video data is sent via the video input terminal 912 while the first operation mode is set, the video switch/mixer 908 can accept that video data. The video switch/mixer 908 outputs video data generated by extracting image information contained in the video data input from the video input terminal 912 and superimposing that image information at a predetermined position on the image of the video data from the video signal processor 907.

In this way, even when the broadcast program data acquired by the TV tuner 902 is played back, if a new mail message is received, information indicating the fact of mail reception is displayed on the screen, and the user can immediately detect that fact.

The user can browse a received mail message by operating the remote controller unit as in the example of FIG. 6.

A modification that allows the personal computers to directly access the mail servers will be explained with reference to FIG. 15.

In this modification, the personal computers of the respective users accesses the mail servers in place of the wireless AV station 101. As shown in FIG. 15, the personal computer 103 of a given user is always connected to the mail server 703 via a predetermined communication line under the control of the mail control unit 712.

The mail control unit 712 accesses mail posts provided to the mail server 703 at given time intervals using the address of the mail server and user's mail address, and checks the presence/absence of received mail messages.

Upon detection of the presence of a received mail message, the mail control unit 712 acquires that received mail message, and requests the wireless AV station 101 to store information ("mail list", "mail data (actual data)", "attached file (image or the like)") of that mail message in a predetermined mail save area in the HDD 51.

In response to this request, the wireless AV station 101 stores the received mail message in the predetermined mail save area in the HDD 51. At this time, the wireless AV station 101 displays information (message or icon) indicating the fact of mail reception on a place designated in advance by the user (on the screen of the TV receiver or that of the display panel of the wireless AV station 101 main body) in the same manner as in FIG. 4 above. Also, the wireless AV station 101 can respond to a browse request of a received mail message from the personal computer.

The operation of the mail control unit 712 in the personal computer 103 in the modification of FIG. 15 will be described below with reference to FIG. 16.

The mail control unit 712 is always connected to the mail server 703 via the network and checks if a new mail message is received (step E1).

If no new mail message is received (No in step E2), the mail control unit 712 waits until a new mail message is received. If a new mail message is received (Yes in step E2), the mail control unit 712 transmits information of that mail message to the wireless AV station 101, and requests the wireless AV station 101 to store it in the HDD 51 (step E3). In this way, the mail information is stored in the HDD 51.

Since the subsequent processes in the wireless AV station 101 are the same as those in steps A4 to A8 described using FIG. 9, a description thereof will be omitted.

As described above, according to this embodiment, each user can instantaneously detect reception of a mail message addressed to him or her even when he or she does not sit at the personal computer, and his or her actions can be prevented from being bound by the personal computer. For example, even when the user is watching a TV program or the like on the TV receiver, he or she can easily detect the fact of mail reception, and can browse the mail message at that place.

Even when a new mail message is received when the user is not present in front of the TV receiver or personal computer, information that advises accordingly can be displayed on the screen of the display panel of the wireless AV station main body. Hence, the user can easily detect the fact of mail reception, and can browse the mail message at that place.

As described in detail above, according to the present invention, the user can be efficiently notified of mail reception.

## Claims

1. An information apparatus, **characterized by** comprising:
determination means (711a) for determining a presence/absence of a received mail message via a network; and
control means (711b) for, when the determination means determines the presence of the received mail message, acquiring and storing the received mail message in a storage medium, and outputting video data which contains image information to notify of a fact of mail reception from a video output terminal to a television receiver.

2. The apparatus according to claim 1, **characterized in that** the control means (711b) transmits information indicating the fact of mail reception to a computer corresponding to a destination user of the received mail message via a network.

3. The apparatus according to claim 1, **characterized by** further comprising display means (710) for displaying information,
the control means (711b) being capable of displaying information indicating the fact of mail reception on the display means.

4. The apparatus according to claim 1, **characterized by** further comprising a television tuner (211) for receiving and processing broadcast program data,
the control means (711b) being capable of outputting, to the television receiver, video data generated by superimposing the image information at a predetermined position on an image of the broadcast program data.

5. The apparatus according to claim 1, **characterized in that** the image information contains a message or icon.

6. The apparatus according to claim 1, **characterized by** further comprising means (711c) for executing a user authentication process in response to an input operation corresponding to a browse request of the received mail message, reading out information of the received mail message for a corresponding user from the storage medium in accordance with an authentication result, and outputting video data containing the read-out information to the television receiver.

7. The apparatus according to claim 1, **characterized by** further comprising means (711c) for executing a user authentication process in response to a browse request of the received mail message sent from a computer via a network, reading out information of the received mail message for a corresponding user from the storage medium in accordance with an authentication result, and transmitting the read-out information to the computer.

8. A mail control method applied to an information apparatus having a video output terminal, the method **characterized by** comprising:
determining a presence/absence of a received mail message via a network (A1, A2); and
acquiring and storing, when the presence of the received mail message is determined in the determination, the received mail message in a storage medium and outputting video data containing image information to notify of a fact of mail reception from the video output terminal to a television receiver (A3 to A6).

9. The method according to claim 8, **characterized by** further comprising:
transmitting, when the presence of the received mail message is determined in the determination, information indicating the fact of mail reception to a computer corresponding to a destination user of the received mail message via a network (A9).

10. The method according to claim 8, **characterized by** further comprising:
displaying, when the presence of the received mail message is determined in the determination, information indicating the fact of mail reception on a display unit equipped on the information apparatus (A7, A8).

11. The method according to claim 8, **characterized by** further comprising:
receiving and processing broadcast program data by a television tuner; and
outputting, to the television receiver, video data generated by superimposing the image information at a predetermined position on an image of the broadcast program data.

12. The method according to claim 8, **characterized in that** the image information contains a message or icon.

13. The method according to claim 8, **characterized by** further comprising:
executing a user authentication process in response to an input operation corresponding to a browse request of the received mail message (B1, B2); and
reading out information of the received mail message for a corresponding user from the storage medium in accordance with an authentication result, and outputting video data containing the read-out information to the television receiver (B3 to B5).

14. The method according to claim 8, **characterized by** further comprising:
executing a user authentication process in response to a browse request of the received mail message sent from a computer via a network (D1, D2); and
reading out information of the received mail message for a corresponding user from the storage medium in accordance with an authentication result, and transmitting the read-out information to the computer (D3 to D5).
